# FASCICULE DE BREVET EUROPEEN

(11) **EP 0 465 290 B1**
(45) Date de publication et mention de la délivrance du brevet: **07.10.1998**
(21) Numéro de dépôt: 91401635.7
(22) Date de dépôt: 18.06.1991
(51) Int. Cl.: H01G 4/22, H01G 4/32, H01G 4/38

(54) **Procédé de fabrication d'un condensateur de puissance**
Verfahren zum Herstellen eines Leistungskondensators
Process for manufacturing a power capacitor

(30) Priorité: 29.06.1990 FR 9008227
(43) Date de publication de la demande: 08.01.1992
(73) Titulaire: THOMSON-CSF PASSIVE COMPONENTS, 21850 Saint-Apollinaire (FR)
(72) Inventeur: Vincent, Claude, F-92045 Paris la Défense (FR)
(74) Mandataire: Guérin, Michel

(56) Documents cités:
- EP-A- 0 045 397
- DE-B- 1 000 530
- FR-A- 2 233 684
- FR-A- 2 579 366
- US-A- 3 424 957

## Description

La présente invention concerne un procédé de fabrication d'un condensateur de puissance, plus particulièrement d'un condensateur de puissance du type constitué par au moins un élément capacitif obtenu par bobinage d'au moins deux films diélectriques métallisés. En fait la présente invention concerne plus particulièrement un procédé de fabrication de condensateurs de puissance du type ci-dessus utilisés dans les éléments de filtrage montés sur du matériel roulant ou fixe. De tels condensateurs doivent présenter une énergie spécifique très importante, en général supérieure à 100 Joules/litre, être le plus léger possible et résister à des contraintes de vibrations non négligeables.

Actuellement, les condensateurs de puissance de ce type sont obtenus en utilisant comme film diélectrique soit du papier soit un film plastique, comme cela est décrit, par exemple, dans la demande de brevet française Nº 74 19385 publiée sous le Nº 2 233 684.

La présente invention a pour but de fournir un procédé de fabrication d'un nouveau type de condensateur de puissance présentant une énergie spécifique non négligeable ainsi qu'un gradient de fonctionnement nettement amélioré par rapport aux condensateurs de l'art antérieur.

En conséquence, la présente invention a pour objet un procédé de fabrication d'un condensateur de puissance, caractérisé par les étapes suivantes :
- bobinage sur une broche d'au moins deux films plastiques métallisés présentant un crénelage formé par des démétallisations locales du film métallisé, de manière à obtenir un élément capacitif cylindrique, le bobinage étant réalisé avec un asservissement continu du foisonnement ;
- aplatissement de l'élément cylindrique de manière à former un élément plat présentant une épaisseur prédéterminée ;
- étuvage sous vide de l'élément plat ;
- shoopage des terminaisons latérales de l'élément plat ;
- câblage des connexions ;
- mise en cuve et imprégnation de l'élément plat avec un diélectrique liquide.

De préférence, pour éviter les courts-circuits entre les films diélectriques métallisés, en début et en fin de bobinage, un film diélectrique non métallisé est inséré entre deux films métallisés.

D'autres caractéristiques et avantages de la présente invention apparaîtront à la lecture de la description faite ci-après d'un mode de réalisation préférentiel d'un procédé de fabrication d'un condensateur de puissance conforme à la présente invention, cette description étant faite avec référence aux dessins ci-annexés dans lesquels :
- les figures 1A et 1B sont respectivement une vue en perspective et une vue en coupe partielle d'un élément capacitif après bobinage ;
- la figure 2 est une vue en perspective d'un condensateur constitué de plusieurs éléments capacitifs avant shoopage ;
- la figure 3 est une vue en perspective d'un condensateur tel que représenté à la figure 2 après câblage des différents éléments capacitifs, et
- la figure 4 est une vue en coupe montrant les éléments capacitifs à l'intérieur d'une cuve.

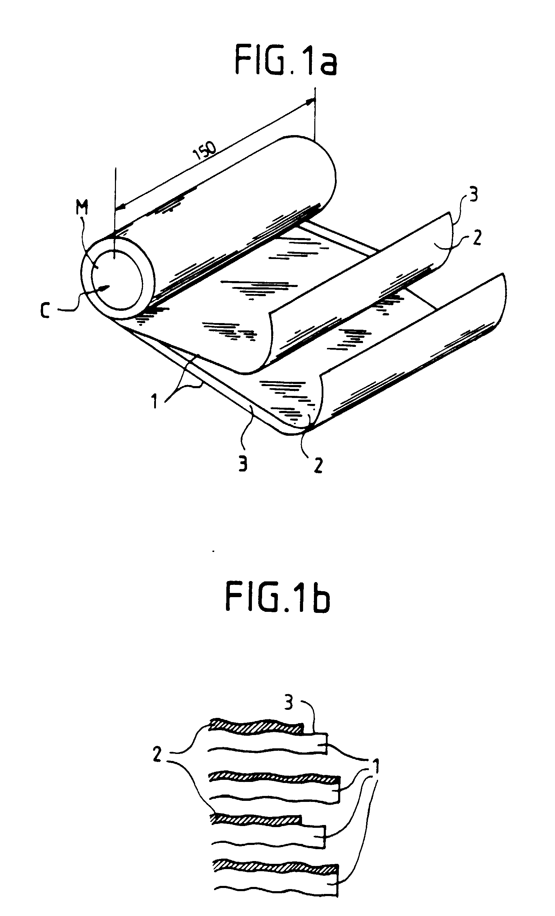

On décrira donc en se référant aux figures 1 à 4 un mode de réalisation préférentiel d'un procédé de fabrication d'un condensateur de puissance conforme à la présente invention.

Comme représenté sur la figure 1A, le ou les éléments capacitifs constituant le condensateur de puissance sont obtenus par bobinage autour d'une broche M d'au moins deux films 1 présentant des zones métallisées 2 et sur leurs bords opposés des marges 3 non métallisées. Le film métallisé utilisé dans le cadre de la présente invention est un film polymère, plus particulièrement un film de polypropylène bi-orienté. Pour permettre une imprégnation ultérieure, le film de polypropylène est de préférence, comme représenté sur la figure 1B, un film rugueux. Il peut être rugueux sur une face ou rugueux sur les deux faces. De manière connue, ce film, prétraité corona, a été métallisé en utilisant un métal tel que l'aluminium dans un appareil de métallisation sous vide (résistivité de la métallisation 1 à 5 Ω/□).

D'autre part, pour obtenir les résultats souhaités, notamment au niveau du gradient de fonctionnement, on utilise un film métallisé présentant un crénelage formé par des démétallisations locales du film métallisé. L'utilisation d'un tel crénelage permet entre autres d'améliorer l'autocicatrisation et les résultats de test ont montré que l'on obtenait ainsi un meilleur gradient de fonctionnement nominal.

Afin de réaliser un shoopage correct sur les tranches de bobines, les deux films métallisés sont bobinés en étant décalés l'un par rapport à l'autre. De plus, un film plastique rugueux non métallisé est inséré entre les deux films sur environ 2 tours en début et en fin de bobinage.

Conformément à la présente invention, le bobinage est réalisé autour de la broche avec un asservissement continu du foisonnement. Dans le mode de réalisation représenté, cet asservissement sera tel que l'on obtienne un diamètre extérieur de bobine sur le mandrin M correspondant à un foisonnement d'environ 15% par rapport à l'épaisseur pondérale du film métallisé. Par foisonnement, on entend l'inter-espace donné par le bobinage entre les couches. Pour obtenir une bonne imprégnation et de bonnes preformances, le foisonnement doit être le plus constant possible.

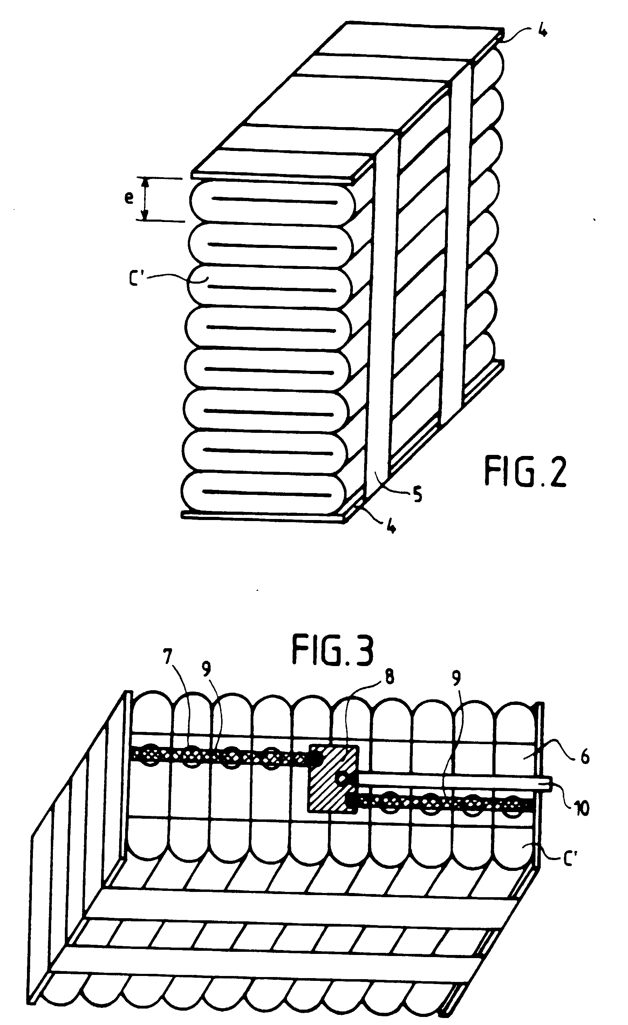

Une fois le bobinage terminé, l'élément capacitif cylindrique C ainsi obtenu est extrait de la broche M, il est aplati et mis en presse à une côte mécanique correspondant à un foisonnement de 12% dans le mode de réalisation représenté de manière à obtenir un élément plat C' tel que représenté sur la figure 2. L'utilisation d'éléments plats permet d'obtenir des éléments dont l'épaisseur e est parfaitement contrôlée, c'est-à-dire des éléments dont le foisonnement est tout à fait déterminé.

Comme représenté sur la figure 2, pour obtenir un condensateur de puissance présentant une valeur de capacité spécifique, plusieurs éléments plats C', à savoir huit dans le mode de réalisation représenté sur la figure 2, sont empilés les uns sur les autres. Ils sont maintenus entre deux plaques 4 réalisées par exemple en tissu de verre époxy, l'ensemble étant solidarisé par l'intermédiaire de deux bandes plastiques 5 de manière à former un pain cerclé.

Conformément au procédé de réalisation de la présente invention, afin de stabiliser mécaniquement le film diélectrique, le pain d'éléments plats est soumis à une cuisson dans une étuve sous-vide. De préférence, cette cuisson est réalisée à une température d'environ 80°C sous un vide inférieur à 10⁻² mm d'Hg. Après avoir atteint la température et le vide désiré, le pain est laissé dans l'étuve pendant 24 heures. Puis, on fait redescendre la température jusqu'à 20°C et on laisse les pains pendant 16 heures avant de les sortir à température ambiante.

Une fois cette opération réalisée, on prépare les différents éléments plats de manière à pouvoir effectuer le shoopage des terminaisons latérales. Dans le mode de réalisation représenté, le shoopage est réalisé de manière connue par projection d'un métal tel que du zinc sur une surface 6 (épaisseur couche de Zn : 0,6 µm).

Après le shoopage, on effectue le câblage des différents éléments capacitifs C. Cette opération de câblage est réalisée après nettoyage des pains de manière à éliminer les poussières de zinc. Ce nettoyage a lieu par exemple en envoyant de l'air comprimé à une pression de 4 bars. On réalise alors le câblage proprement dit des différents éléments. Ce câblage est réalisé en soudant tout d'abord un clinquant de cuivre étamé sur la partie médiane qui a pour but de rigidifier l'ensemble du pain. Puis on soude sur chaque élément une tresse de cuivre 9.

Comme représenté sur la figure 3, les connexions des différents éléments sont réalisées symétriquement en haut et en bas de la médiane pour chaque demi-pain de manière à obtenir une meilleure répartition des courants. Dans ce cas, les éléments capacitifs sont montés en parallèle. Il est évident pour l'homme de l'art que les éléments capacitifs peuvent être montés en parallèle et/ou en série.

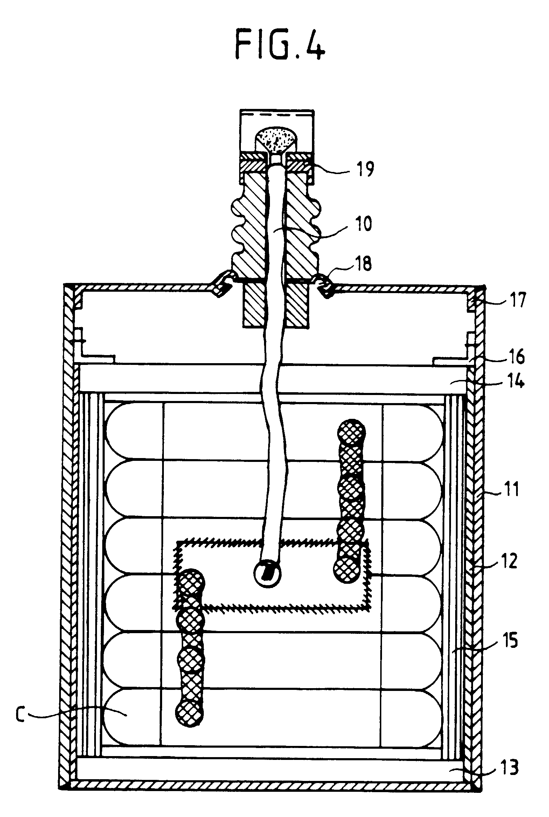

D'autre part, comme représenté sur la figure 3, un fil de connexion 10 est soudé sur la partie 8. Ce fil de connexion est destiné à relier le pain capacitif à la borne de connexion extérieure, comme représenté sur la figure 4.

Avant de réaliser l'imprégnation du pain d'éléments capacitifs ainsi obtenu, on effectue un certain nombre d'essais de régénération. Ces essais à sec permettent d'éliminer les points faibles, d'obtenir une population plus homogène et d'augmenter les rendements finaux. Le premier essai consiste à décharger dans chaque pain une énergie ballast de, par exemple, 62 Joules, qui correspond à la charge sous 500 Volts d'un condensateur de 500µF. Cet essai permet de réaliser le décourt-circuitage.

Ensuite, on réalise des essais de régénération en tension. Chaque pain est chargé à une tension continue correspondant à un gradient sur le film de, par exemple, 200V/µm. Cette tension est appliquée pendant un temps d'environ 10 secondes. Pendant ce temps, on observe donc un nombre important de régénérations. Si les régénérations ne sont pas stabilisées au bout de 30 secondes, le pain est considéré comme inutilisable.

Une fois ces essais réalisés, le pain est alors prêt à être monté en cuve comme représenté sur la figure 4. Conformément à la présente invention, on utilise comme cuve un boîtier parallélépipèdique métallique, réalisé par exemple en acier, en inox, en aluminium. Le boîtier métallique permet de mettre facilement à la masse le condensateur et est utilisé pour des raisons de sécurité. Comme représenté sur la figure 4, la cuve métallique 11 est garnie intérieurement avec des plaques 12, 13 ainsi qu'une plaque de maintien 14 insérée ultérieurement, réalisés en des matériaux isolants par exemple en polypropylène. Ces plaques en matériaux isolants servent à isoler électriquement le ou les pains par rapport à la cuve. A titre d'exemple, la plaque 13, disposée en fond de cuve, présente une épaisseur de 10mm tandis que les profilés latéraux 12 présentent une épaisseur de 2mm. Ensuite un ou plusieurs pains d'éléments capacitifs C' sont introduits dans la cuve métallique 11 et sont calés avec un ou plusieurs jeux de plaques 15 réalisées elles aussi en matériaux isolants. Le calage du ou des pains à l'intérieur de la cuve est essentiel pour que les éléments capacitifs supportent les vibrations. La plaque de maintien 14 est ensuite introduite. Deux équerres 16 sont alors soudées en haut de cuve pour immobiliser l'ensemble.

Ensuite, comme représenté sur la figure 4, la cuve est munie d'un couvercle 17 présentant une ouverture 18 pour le passage des bornes de connexion 19 et l'imprégnation. Une fois les pains capacitifs montés dans la cuve, on réalise alors leur imprégnation. Cette imprégnation est effectuée en utilisant un diélectrique liquide, de préférence un diélectrique de type végétal tel que l'huile de colza qui a pour principal avantage de ne pas abîmer la métallisation et de pénétrer très faiblement le film polypropylène.

Toutefois, il est évident pour l'homme de l'art que des mélanges huile de colza et liquides de synthèses aromatiques pourraient aussi être utilisés, sous réserve qu'ils ne détériorent pas la métallisation. Des adjuvants tels que anti-oxydant et époxy sont ajoutés dans des préparations inférieures au % ; ces adjuvants, en particulier l'époxy, permettent d'augmenter les durées de vie des condensateurs.

L'imprégnation se réalise en deux phases. On effectue tout d'abord le séchage du condensateur, de préférence à une température de 50°C sous un vide de 10⁻²mm de mercure. On considère que le condensateur est correctement séché lorsqu'on a atteint le couple 50°C/10⁻²mm d'Hg pendant 24 heures.

Puis on réalise l'imprégnation proprement dite. Pour cela, on dégaze sous vide, à 60°C, le liquide et on le dépollue sur des matériaux terres ou sur colonne d'alumine activée. Le liquide est alors admis dans la cuve d'imprégnation sous vide à 10⁻² mm de mercure. Les pains capacitifs sont alors imprégnés par immersion. On considère que le condensateur est complètement imprégné lorsque l'augmentation de capacité sur huit heures n'excède pas 1%. A ce stade, le vide est cassé sous azote à pression atmosphèrique et la température est alors coupée. Lorsque l'ensemble est refroidi, le liquide est vidé de la cuve et l'on obture le trou d'imprégnation par soudure d'une capsule ou d'un préssostat préréglé à 0,7 bar, un tel système permet de détecter toute augmentation de pression interne due à un défaut quelconque, et contribue alors à une fonction de sécurité.

Les condensateurs ainsi obtenus sont alors soumis à des contrôles de fin de production de type classique, tels que des essais d'étanchéité, des contrôles électriques à température ambiante et de traitements de finition.

L'utilisation du procédé de réalisation décrit ci-dessus a donc permis d'obtenir des condensateurs de puissance présentant une énergie spécifique importante, à savoir supérieure à 100 Joules par litre. D'autre part, ces condensateurs peuvent être soumis à des contraintes de vibration.

## Revendications

1. Procédé de fabrication d'un condensateur de puissance, caractérisé par les étapes suivantes :
- bobinage sur une broche d'au moins deux films plastiques métallisés présentant un crénelage formé par des démétallisations locales du film métallisé, de manière à obtenir un élément capacitif cylindrique, le bobinage étant réalisé avec un asservissement continu du foisonnement;
- aplatissement de l'élément cylindrique de manière à former un élément plat présentant une épaisseur prédéterminée;
- étuvage sous vide de l'élément plat;
- shoopage des terminaisons latérales de l'élément plat;
- câblage des connexions;
- mise en cuve et imprégnation de l'élément plat avec un diélectrique liquide.

2. Procédé selon la revendication 1, caractérisé en ce que, en début et en fin de bobinage, un film diélectrique non métallisé est inséré entre les deux films métallisés.

3. Procédé selon l'une des revendications 1 et 2, caractérisé en ce que plusieurs éléments plats sont placés en parallèle avant l'opération d'étuvage de manière à obtenir la capacité voulue.

4. Procédé selon la revendication 3, caractérisé en ce que les éléments plats sont montés dans une cuve métallique avec interposition de cales en matériau isolant pour que les éléments capacitifs supportent les vibrations.

5. Procédé selon l'une des revendications 1 à 4, caractérisé en ce que le foisonnement de l'élément cylindrique est d'environ 15%.

6. Procédé selon l'une des revendications 1 à 5, caractérisé en ce que le foisonnement de l'élément plat est d'environ 12%.

7. Procédé selon l'une des revendications 1 à 6, caractérisé en ce que le film plastique est un film polymère à surface rugueuse.

8. Procédé selon la revendication 7, caractérisé en ce que le film plastique est un film de polypropylène.

9. Procédé selon l'une des revendications 1 à 8, caractérisé en ce que le diélectrique liquide d'imprégnation est de l'huile de colza.

10. Procédé selon l'une des revendications 1 à 9, caractérisé en ce que l'imprégnation est faite en deux phases, comprenant un séchage du condensateur sous vide et une imprégnation sous vide par immersion du condensateur.

11. Procédé selon la revendication 10, caractérisé en ce que le séchage est effectué à une température de 50°C.

12. Procédé selon l'une des revendications 10 et 11, caractérisé en ce que le séchage et l'imprégnation sont effectués sous un vide de 10⁻² mm de mercure.

13. Procédé selon l'une des revendications 1 à 12, caractérisé en ce qu'on utilise pour le bobinage un film métallisé de résistivité comprise entre 1 et 5 ohms par carré.

## Patentansprüche

1. Verfahren zur Herstellung eines Leistungskondensators, gekennzeichnet durch die folgenden Verfahrensschritte:
- auf einen Dorn werden mindestens zwei metallbeschichtete Kunststoffolien mit einer Rippung bestehend aus lokalen Bereichen ohne Metallbeschichtung gewickelt, sodaß sich ein zylindrisches kapazitives Element ergibt, wobei das Wickeln unter kontinuierlicher Regelung des Füllgrads erfolgt;
- das zylindrische Element wird plattgedrückt, sodaß sich ein flaches Element mit einer vorbestimmten Dicke ergibt;
- das flache Element wird unter Vakuum ausgeheizt;
- die seitliche Metallisierung des flachen Elements wird hergestellt;
- die Kabelanschlüsse werden hergestellt;
- das flache Element wird in einen Behälter gebracht und mit einer dielektrischen Flüssigkeit imprägniert.

2. Verfahren nach Anspruch 1, dadurch gekennzeichnet, daß am Anfang und am Ende der Wicklung eine nicht mit Metall beschichtete dielektrische Folie zwischen die beiden metallbeschichteten Folien eingefügt wird.

3. Verfahren nach einem der Ansprüche 1 und 2,
dadurch gekennzeichnet, daß mehrere flache Elemente vor dem Ausheizen parallel angeordnet werden, um die gewünschte Kapazität zu erreichen.

4. Verfahren nach Anspruch 3, dadurch gekennzeichnet, daß die flachen Elemente in einem Metallbehälter unter Zwischenlage von Isolierschichten montiert werden, damit die kapazitiven Elemente Vibrationen standhalten.

5. Verfahren nach einem der Ansprüche 1 bis 4,
dadurch gekennzeichnet, daß der Füllgrad des zylindrischen Elements etwa 15% beträgt.

6. Verfahren nach einem der Ansprüche 1 bis 5,
dadurch gekennzeichnet, daß der Füllgrad des flachen Elements etwa 12% beträgt.

7. Verfahren nach einem der Ansprüche 1 bis 6,
dadurch gekennzeichnet, daß die Kunststoffolie aus Polymermaterial ist und eine gewellte Oberfläche besitzt.

8. Verfahren nach Anspruch 7, dadurch gekennzeichnet, daß die Kunststoffolie eine Polypropylenfolie ist.

9. Verfahren nach einem der Ansprüche 1 bis 8,
dadurch gekennzeichnet, daß die dielektrische Imprägnierflüssigkeit Rapsöl ist.

10. Verfahren nach einem der Ansprüche 1 bis 9,
dadurch gekennzeichnet, daß die Imprägnierung des Kondensators in zwei Phasen erfolgt, und zwar zuerst einer Trokkenphase unter Vakuum und dann einer Imprägnierphase durch Immersion unter Vakuum.

11. Verfahren nach Anspruch 10, dadurch gekennzeichnet, daß das Trocknen bei einer Temperatur von 50°C erfolgt.

12. Verfahren nach einem der Ansprüche 10 und 11,
dadurch gekennzeichnet, daß das Trocknen und die Imprägnierung unter einem Vakuum von 10⁻²mm Quecksilber erfolgt.

13. Verfahren nach einem der Ansprüche 1 bis 12,
dadurch gekennzeichnet, daß man für die Wicklung eine metallbeschichtete Folie mit einem spezifischen Widerstand von zwischen 1 und 5 Ω pro Quadrat verwendet.

## Claims

1. Process for manufacturing a power condenser, characterized by the following steps:
- winding onto a spindle at least two metallized plastic films exhibiting a crenelation formed by local demetallizations of the metallized film, so as to obtain a cylindrical capacitive element, the winding being carried out with continuous control of the expansion;
- flattening the cylindrical element so as to form a flat element having a predetermined thickness;
- stoving the flat element under vacuum;
- spraying metal onto the lateral terminations of the flat element using the Schoop process;
- wiring up the connections;
- canning and impregnating the flat element with a liquid dielectric.

2. Process according to Claim 1, characterized in that at the start and end of winding, a non-metallized dielectric film is inserted between the two metallized films.

3. Process according to either of Claims 1 and 2, characterized in that several flat elements are placed in parallel before the stoving operation so as to obtain the desired capacitance.

4. Process according to Claim 3, characterized in that the flat elements are mounted in a metal can with interposition of shims made of insulating material in order for the capacitive elements to withstand the vibrations.

5. Process according to one of Claims 1 to 4, characterized in that the expansion of the cylindrical element is approximately 15%.

6. Process according to one of Claims 1 to 5, characterized in that the expansion of the flat element is approximately 12%.

7. Process according to one of Claims 1 to 6, characterized in that the plastic film is a polymer film having a rough surface.

8. Process according to Claim 7, characterized in that the plastic film is a polypropylene film.

9. Process according to one of Claims 1 to 8, characterized in that the liquid impregnation dielectric is rapeseed oil.

10. Process according to one of Claims 1 to 9, characterized in that the impregnation is performed in two phases, comprising vacuum-drying of the capacitor and vacuum immersion impregnation of the capacitor.

11. Process according to Claim 10, characterized in that the drying is carried out at a temperature of 50°C.

12. Process according to one of Claims 10 and 11, characterized in that the drying and the impregnation are carried out under a vacuum of 10⁻² mm of mercury.

13. Process according to one of Claims 1 to 12, characterized in that a metallized film having a resistivity of between 1 and 5 ohms per square is used for the winding.
